(19) Europäisches Patentamt
European Patent Office
Office européen des brevets

(11) **EP 2 594 017 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **11738666.4**

(22) Anmeldetag: **08.07.2011**

(51) Int Cl.:
***H02P 23/00*** *(2016.01)*

(86) Internationale Anmeldenummer:
**PCT/EP2011/061671**

(87) Internationale Veröffentlichungsnummer:
**WO 2012/007396 (19.01.2012 Gazette 2012/03)**

(54) **VERFAHREN UND VORRICHTUNG ZUR BESTIMMUNG EINES MOMENTANEN DREHMOMENTS EINER ELEKTRONISCH KOMMUTIERTEN ELEKTRISCHEN MASCHINE SOWIE ZUR REGELUNG DES MITTLEREN DREHMOMENTS**

METHOD AND DEVICE FOR DETERMINING A MOMENTARY TORQUE OF AN ELECTRONICALLY SWITCHED ELECTRIC MACHINE AND FOR REGULATING THE AVERAGE TORQUE

PROCÉDÉ ET DISPOSITIF PERMETTANT DE DÉTERMINER UN COUPLE DE ROTATION MOMENTANÉ D'UN MOTEUR ÉLECTRIQUE À COMMUTATION ÉLECTRONIQUE ET DE RÉGULER LE COUPLE DE ROTATION MOYEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2010 DE 102010031435**

(43) Veröffentlichungstag der Anmeldung:
**22.05.2013 Patentblatt 2013/21**

(73) Patentinhaber: **Robert Bosch GmbH
70442 Stuttgart (DE)**

(72) Erfinder:
- **FRICKER, David
  F-67240 Oberhoffen sur Moder (FR)**
- **KNECHT, Gerhard
  76473 Iffezheim (DE)**

(56) Entgegenhaltungen:
**JP-A- 6 194 240        JP-A- 59 156 179
JP-A- 61 008 640        JP-A- 2006 094 596
US-A- 4 562 393        US-A- 4 602 201
US-A1- 2004 178 756**

**Beschreibung**

Technisches Gebiet

Die vorliegende Erfindung betrifft elektronisch kommutierte elektrische Maschinen, insbesondere elektrische Maschinen, die ein Drehmoment gemäß einem vorgegebenen Solldrehmoment bereitstellen sollen.

Stand der Technik

Es sind allgemein mehrphasige elektronisch kommutierte elektrische Maschinen, wie beispielsweise Synchronmotoren, Asynchronmotoren und dergleichen, bekannt. Zum Betreiben derartiger elektrischer Maschinen wird eine Steuereinheit verwendet, die eine Treiberschaltung ansteuert, um ein gewünschtes Drehmoment durch Vorgabe von Phasenspannungsverläufen einzustellen. Die jeweiligen Phasenspannungen können mithilfe einer so genannten Pulweitenmodulation eingestellt werden, indem an die Phasenstränge jeweils im Wechsel ein hohes und ein niedriges Potential angelegt wird. Über ein vorgegebenes Tastverhältnis der Pulweitenmodulation lässt sich so die effektiv an dem Phasenstrang anliegende Spannung einstellen.

Eine Rückmeldung über das von der elektrischen Maschine bereitgestellte Drehmoment erhält man in der Regel durch eine Auswertung der Phasenströme, so dass mithilfe einer feldorientierten Regelung das von der elektrischen Maschine bereitgestellte Drehmoment geregelt werden kann. Ein Beispiel dafür liefert das Dokument US2004178756. Die Messung der Phasenströme ist in der Regel aufwändig zu realisieren und kann beispielsweise bei der Verwendung von Messwiderständen (Shunts) zu Messverlusten führen, die die Leistung der elektrischen Maschine beeinträchtigen und daher unerwünscht sind.

Die Strangströme können indirekt aus dem Eingangsstrom und den Schaltzuständen ermittelt werden, wie in den Dokumenten JP2006094596 und US4602201 dargelegt.

Es ist daher Aufgabe der vorliegenden Erfindung, ein Verfahren und eine Vorrichtung zum Ermitteln eines momentanen Drehmoments einer elektrischen Maschine, insbesondere zur Verwendung in einer Drehmomentregelung, zur Verfügung zu stellen, bei denen das Drehmoment ohne die aufwändige Messung von Phasenströmen bestimmt werden kann.

Offenbarung der Erfindung

Diese Aufgabe wird durch das Verfahren zum Ermitteln eines Drehmoments einer elektrischen Maschine gemäß Anspruch 1, durch das Verfahren zum Regeln des mittleren Drehmoments einer elektrischen Maschine sowie durch die Vorrichtungen gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Ermitteln eines Ist-Drehmoments einer mehrphasigen elektrischen Maschine vorgesehen. Die elektrische Maschine wird mithilfe einer Treiberschaltung angesteuert, indem Verläufe von Phasenspannungen bzw. Phasenpotenzialen an Phasensträngen der elektrischen Maschine angelegt werden. Das Verfahren umfasst die folgenden Schritte:

- Ermitteln der aufgenommenen elektrischen Leistung und der ohmschen Verlustleistung der elektrischen Maschine;
- Ermitteln der bereitgestellten mechanischen Leistung der elektrischen Maschine durch eine Leistungsbilanz abhängig von der aufgenommenen elektrischen Leistung und den ohmschen Verlusten;
- Bestimmen des Ist-Drehmoments anhand der ermittelten mechanischen Leistung.

Eine Idee des obigen Verfahrens besteht darin, das momentane von der elektrischen Maschine bereitgestellte Drehmoment mithilfe einer Leistungsbilanz zu ermitteln, wobei sich die mechanische Leistung, die von dem bereitgestellten Drehmoment abhängt, aus der zugeführten elektrischen Leistung und den elektrischen Wärmeverlusten ergibt, insbesondere aus deren Differenz. Dadurch ist es möglich, bei der Ermittlung des momentanen Ist-Drehmoments auf die Messung von einzelnen Phasenströmen zu verzichten und stattdessen lediglich eine einzige Strommessung zur Messung des der elektrischen Maschine insgesamt zugeführten elektrischen Motorstroms durchzuführen.

Weiterhin kann das Ermitteln der aufgenommenen elektrischen Leistung und der ohmschen Verlustleistung der elektrischen Maschine anhand einer Gesamtstromaufnahme durchgeführt werden, wobei die Gesamtstromaufnahme der Treiberschaltung ermittelt wird, um den gesamten durch Phasenstränge der elektrischen Maschine fließenden Motorstrom zu detektieren.

Gemäß einer Ausführungsform kann eine absolute Läuferlage ermittelt werden, wobei die mechanische Leistung anhand der ermittelten absoluten Läuferlage bestimmt wird.

Die Treiberschaltung kann die elektrische Maschine gemäß einer Pulsweitenmodulation ansteuern, wobei die ohmsche Verlustleistung abhängig von einem Tastverhältnis der Pulsweitenmodulation ermittelt wird.

Es kann vorgesehen sein, dass die Verläufe der Phasenspannungen bzw. der Phasenpotenziale sinusförmig geformt sind, so dass der niederfrequente Anteil des gesamten Motorstroms keine oder nur geringe Rotorlage-Abhängigkeiten aufweist.

Der ermittelte gesamte Motorstrom oder der ermittelte niederfrequente Anteil des gesamten Motorstroms kann mit einem Formfaktor beaufschlagt werden, der von dem durch die Ansteuerungsart bestimmten Verlauf der Phasenspannungen bzw. der Phasenpotenziale bestimmt ist.

Der ermittelte gesamte Motorstrom oder der ermittelte niederfrequente Anteil des gesamten Motorstroms kann durch den cos φ - als Phasenverschiebung zwischen den erwarteten Strom und die Spannung - zur Korrektur dividiert werden.

Gemäß einem weiteren Aspekt ist ein Verfahren zum Regeln eines Drehmoments einer elektrischen Maschine vorgesehen. Das Verfahren umfasst folgende Schritte:

- Ermitteln eines Ist-Drehmoments nach obigem Verfahren;
- Bestimmen eines Betrags eines durch die Phasenspannungen bzw. die Phasenpotenziale bestimmten Spannungszeigers abhängig von dem IstDrehmoment und von einem bereitgestellten Soll-Drehmoment;
- Ansteuern der elektrischen Maschine durch Anlegen eines Spannungszeigers mit dem bestimmten Betrag.

Gemäß einem weiteren Aspekt ist eine Vorrichtung zum Ermitteln eines Ist-Drehmoments einer mehrphasigen elektrischen Maschine vorgesehen, wobei die elektrische Maschine mit Hilfe einer Treiberschaltung angesteuert wird, indem Verläufe von Phasenspannungen bzw. Phasenpotenzialen an Phasensträngen der elektrischen Maschine angelegt werden, mit folgenden Schritten:

- Ermitteln der aufgenommenen elektrischen Leistung und der ohmschen Verlustleistung der elektrischen Maschine;
- Ermitteln der bereitgestellten mechanischen Leistung der elektrischen Maschine durch eine Leistungsbilanz abhängig von der aufgenommenen elektrischen Leistung und den ohmschen Verlusten;
- Bestimmen des Ist-Drehmoments anhand der ermittelten mechanischen Leistung.

Gemäß einem weiteren Aspekt ist ein Motorsystem vorgesehen, umfassend:

- eine elektrische Maschine;
- eine Treiberschaltung;
- ein Steuergerät, das die obige Vorrichtung und eine Regelungseinrichtung aufweist, um abhängig von dem Ist-Drehmoment und von einem bereitgestellten Soll-Drehmoment einen Betrag eines durch die Phasenspannungen bzw. die Phasenpotenziale bestimmten Spannungszeigers zu bestimmen und die elektrische Maschine durch Anlegen eines Spannungszeigers mit dem bestimmten Betrag mithilfe der Treiberschaltung anzusteuern.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1                    eine schematische Darstellung eines Motorsystems;

Figuren 2a und 2b     mögliche Topologien der Treiberschaltung für mehrphasige elektrische Maschinen; und

Figur 3                    ein Blockschaltbild des Steuergeräts des Motorsystems der Figur 1.

Beschreibung von Ausführungsformen

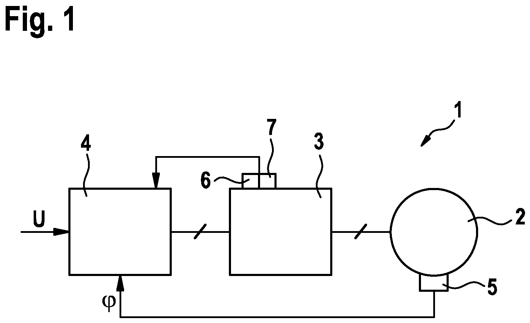

Figur 1 zeigt eine schematische Darstellung eines Motorsystems 1 mit einer elektrischen Maschine 2, die als Synchronmotor, Asynchronmotor oder dergleichen ausgebildet sein kann. Im Folgenden wird als elektrische Maschine 2 ein Elektromotor 2 angenommen; es kann sich jedoch auch um einen Generator handeln, der mit einem Drehmoment angetrieben wird. Der Elektromotor 2 ist elektronisch kommutiert, d.h. erweist keine Läuferwicklung auf, die von extern, z.B. über einen mechanischen Kommutator oder über Schleifer, elektrisch versorgt werden muss. Bei Synchronmaschinen ist der Läufer mit Permanentmagneten versehen, die Läuferpole ausbilden, um ein Erregermagnetfeld bereitzustellen. Weiterhin sind mehrere Phasenstränge an einem entsprechenden Stator vorgesehen, die durch Anlegen von Phasenspannungen bzw. Phasenpotenzialen angesteuert werden, um ein Magnetfeld in einer Richtung zu erzeugen, die von einem durch die Phasenspannungen bestimmten Spannungszeiger abhängt. Das Magnetfeld wird bezüglich der Bewegungsrichtung des Läufers und der Richtung des Magnetfelds, das durch die Permanentmagneten erzeugt wird, voreilend erzeugt, so dass ein Drehmoment bereitgestellt werden kann. Das von dem Elektromotor 2 bereitgestellte Drehmoment hängt im Wesentlichen von Motorparametern, dem Betrag der Spannung des Spannungszeigers und von dem Winkel der Voreilung des durch den Spannungszeiger bewirkten Statormagnetfelds bezüglich des durch den Läufer erzeugten Erregermagnetfelds ab.

Im Folgenden werden die Ausführungsformen anhand eines Synchronmotors 2 beispielhaft beschrieben, wobei das vorgestellte Verfahren auch mit anderen Arten von elektronisch kommutierten elektrischen Maschinen durchführbar ist.

Der Synchronmotor 2 wird durch eine Treiberschaltung 3 angesteuert, welche die Phasenspannungen bzw. Phasenpotenziale zum Bereitstellen des Spannungszeigers ausgibt. Die Treiberschaltung 3 dient dazu, die elektrische Leistung zum Betreiben des Synchronmotors 2 bereitzustellen. Die Phasenspannungen bzw. die Phasenpotenziale werden durch das Anlegen von geeigneten Steuersignalen an die Treiberschaltung 3 erzeugt. Die Steuersignale werden von einem Steuergerät 4 bereitgestellt.

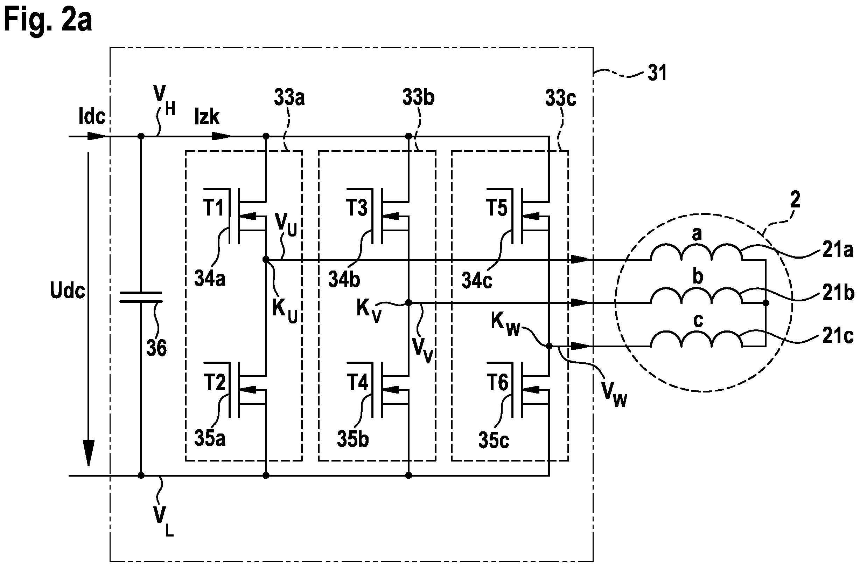

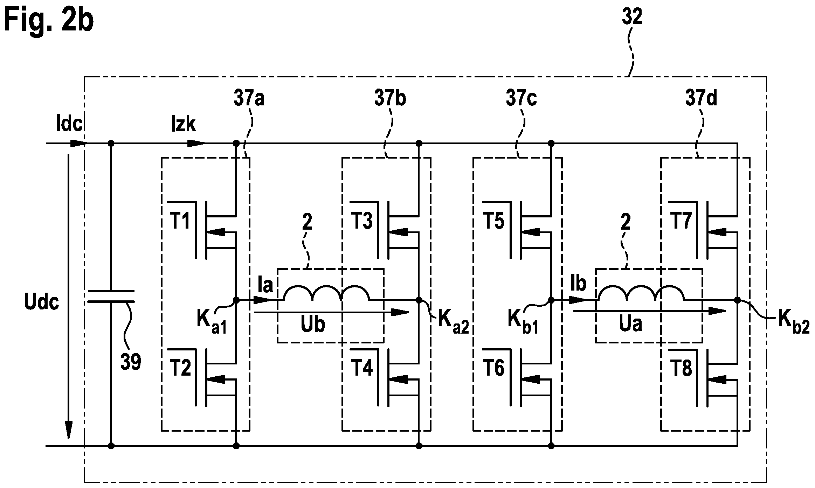

In den Figuren 2a und 2b sind Beispiele für Treiberschaltungen 3 dargestellt. Die Figur 2a zeigt schematisch eine erste Treiberschaltung 31. Die erste Treiberschaltung 31 ist in Form einer so genannten B6-Topologie aufgebaut, um einen dreiphasigen Synchronmotor mit den Phasensträngen 21 a, 21 b, 21 c, die im gezeigten Ausführungsbeispiel in Sternschaltung miteinander verschaltet sind, mit Phasenpotenzialen $V_u$, $V_v$, $V_w$ zu versorgen.

Die erste Treiberschaltung 31 weist für jeden der Phasenstränge 21 a, 21 b, 21 c eine Inverterschaltung 33a, 33b, 33c auf, die jeweils einen High-Side-Leistungsschalter 34a, 34b, 34c und einen entsprechenden Low-Side-Leistungsschalter 35a, 35b, 35c aufweist. Die High-Side-Leistungsschalter 34a, 34b, 34c und die Low-Side-Leistungsschalter 35a, 35b, 35c können jeweils als Leistungstransistoren, wie beispielsweise MOSFETs, Thyristoren, IGBTs, IGCTs und dergleichen ausgebildet sein.

In jeder der Inverterschaltungen 33a, 33b, 33c ist ein High-Side-Leistungsschalter 34a, 34b, 34c mit einem entsprechenden Low-Side-Leistungsschalter 35a, 35b, 35c zwischen einem hohen Versorgungspotential $V_H$ und einem niedrigen Versorgungspotential $V_L$ seriell angeschlossen. Zwischen dem hohen und dem niedrigen Versorgungspotential $V_H$, $V_L$ liegt entsprechend die Versorgungsspannung $U_{DC}$ an. Anschlussknoten $K_u$, $K_v$, $K_w$ jeweils zwischen den Leistungsschaltern 34a, 34b, 34c und 35a, 35b, 35c sind mit den Phasensträngen 21a, 21b, 21c des Synchronmotors 2 verbunden. Die Leistungsschalter 34a, 34b, 34c und 35a, 35b, 35c werden durch die Steuersignale T1 bis T6 angesteuert.

Durch entsprechende Wahl der Steuersignale T1 bis T6 können an den Anschlussknoten $K_u$, $K_v$, $K_w$ Phasenpotenziale generiert werden. Gemäß einer Ansteuerungsart sind immer zwei der Inverterschaltungen 33a, 33b, 33c aktiv, d.h. es wird an dem betreffenden Anschlussknoten $K_u$, $K_v$, $K_w$ das hohe oder das niedrige Versorgungspotential $V_H$, $V_L$ angelegt, während an dem Anschlussknoten der übrigen Inverterschaltungen 33a, 33b, 33c kein Spannungspotenzial ausgegeben wird. Der entsprechende Anschlussknoten ist floatend, d.h. er weist ein schwebendes Potenzial auf. Diese Art der Ansteuerung wird Blockkommutierung genannt; es sind jedoch auch andere Möglichkeiten der Ansteuerung und des Betreibens des Synchronmotors 2 denkbar.

Insgesamt wird über die Auswahl der Phasenspannungspotenziale $V_u$, $V_v$, $V_w$ an den Anschlussknoten $K_u$, $K_v$, $K_w$ ein Spannungszeiger generiert, der einen bestimmten Betrag und einen Phasenwinkel aufweist. Um effektive Phasenspannungen $V_u$, $V_v$, $V_w$ zu erzeugen, deren Beträge zwischen dem hohen Versorgungspotential $V_H$ und dem niedrigen Versorgungspotential $V_L$ liegen, wird eine Pulsweitenmodulation verwendet, bei der der High-Side-Leistungsschalter 34a, 34b, 34c und der entsprechende Low-Side-Leistungsschalter 35a, 35b, 35c einer bestimmten Inverterschaltung 33a, 33b, 33c zyklisch im Wechsel geschaltet werden, wobei die Einschaltzeiten der Leistungsschalter jeweils durch ein Tastverhältnis der Pulsweitenmodulation bestimmt werden. Das Tastverhältnis wird in der Regel als das Verhältnis der Zeitdauer, während der einer der High-Side-Leistungsschalter 34a, 34b, 34c der entsprechenden Inverterschaltung 33a, 33b, 33c innerhalb einer konstanten Zykluszeitdauer leitend ist, zu der gesamten Zykluszeitdauer angegeben.

Eingangsseitig der ersten Treiberschaltung 31 ist eine Kapazität 36 vorgesehen, die dazu dient, die Versorgungsspannung $U_{DC}$ zu glätten und Stromripple auf die Versorgungsspannungsleitungen zur Versorgung der Treiberschaltung 3 zu reduzieren.

In Figur 2b ist eine weitere Ausführungsform einer Treiberschaltung 3 dargestellt. Die zweite Treiberschaltung 32 der Figur 2b dient zur Ansteuerung eines zweiphasigen Synchronmotors 2 und hat den Aufbau einer 2H-Topologie. Bei der 2H-Topologie werden die zwei Phasenstränge des zweiphasigen Synchronmotors 2 jeweils zwischen zwei Inverterschaltungen 37a, 37b; 37c, 37d geschaltet. Die Inverterschaltungen 37a, 37b; 37c, 37d entsprechen in ihrem Aufbau den Inverterschaltungen 33a, 33b, 33c der ersten Treiberschaltung 31 und umfassen Leistungsschalter, die jeweils durch ein Steuersignal T1 bis T8 angesteuert werden. Weiterhin ist die zweite Treiberschaltung 32 mit einer Kapazität 36 versehen, die parallel zu der Versorgungsspannung $U_{DC}$ angeschlossen ist.

Die Phasenstränge des Synchronmotors 2 sind jeweils zwischen den Anschlussknoten $K_{a1}$, $K_{a2}$ von zwei der Inverterschaltungen 37a, 37b und zwischen den Anschlussknoten $K_{b1}$, $K_{b2}$ der Inverterschaltungen 37c, 37d geschaltet. Das Anlegen einer Phasenspannung an den Phasenstrang erfolgt in der Regel, indem eine der Inverterschaltungen, die einem Phasenstrang zugeordnet ist, pulsweitenmoduliert angesteuert wird, während der Low-Side-Leistungsschalter der jeweils anderen Inverterschaltung, die einem Phasenstrang zugeordnet ist, leitend geschaltet wird. Somit kann über jeden der Phasenstränge eine Spannung zwischen $+U_{DC}$ und $-U_{DC}$ angelegt werden, je nachdem welche der Inverterschaltungen pulsweitenmoduliert angesteuert wird.

Die Ansteuerung der Treiberschaltung 3, 31, 32 erfolgt durch das Steuergerät 4, dem als Vorgabegröße V eine Angabe zu einem Sollmoment $M_{soll}$ bereitgestellt wird. Das Steuergerät 4 implementiert eine Drehmomentregelung und erhält dazu als Rückkopplungsgrößen eine Läuferlageinformation $\varphi$ von einem Positionsdetektor 5, der an dem Synchronmotor 2 angeordnet ist. Der Positionsdetektor 5 kann beispielsweise mithilfe von Hall-Sensoren oder GMR (GMR: Giant Magnetic Resistance)-Sensoren die Läuferlage relativ oder absolut angeben und diese an das Steuergerät 4 kommunizieren. Wenn der Positionsdetektor 5 nur eine Läuferlageänderung angibt, kann vorgesehen sein, dass daraus die absolute Läuferlage z.B. mithilfe eines Zählers ermittelt wird.

Weiterhin ist die Treiberschaltung 3 mit einem Spannungssensor 6 und einem Stromsensor 7 versehen, um die Versorgungsspannung $U_{DC}$ und einen unmittelbar durch die Inverterschaltungen 33a, 33b, 33c bzw. 37a, 37b, 37c, 37d fließenden Strom $I_{ZK}$ zu detektieren und entsprechende Angaben an das Steuergerät 4 bereitzustellen. Der Strom $I_{ZK}$ entspricht einem Versorgungsstrom abzüglich des Stroms durch die entsprechenden Kapazitäten 36, 39.

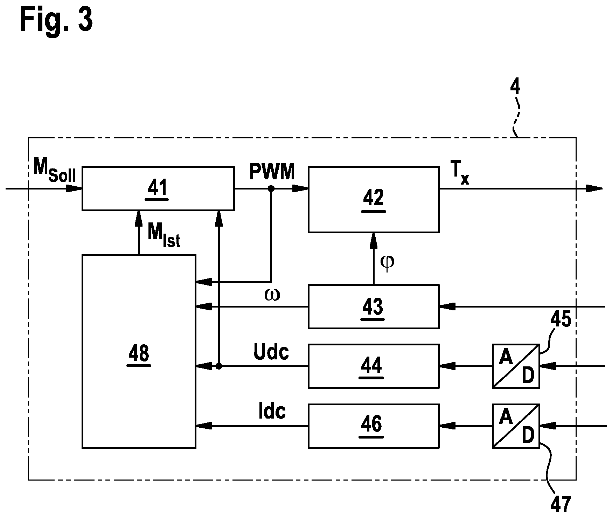

In Figur 3 ist die Funktion des Steuergeräts 4 schematisch als Blockschaltbild dargestellt.

Das Steuergerät 4 umfasst als wesentliche Einheit eine Regelungseinrichtung in Form eines Drehmomentreglers 41, der als Vorgabegröße V eine Angabe zu dem Sollmoment $M_{Soll}$ und dem momentanen vom Synchronmotor 2 bereitgestellten Ist-Drehmoment $M_{Ist}$ empfängt. Abhängig von einer Differenz zwischen dem Sollmoment $M_{Soll}$ und dem Ist-Drehmoment $M_{Ist}$ wird ein Tastverhältnis für die Pulweitenmodulation vorgegeben, das in einem Steuersignalgenerierungsblock 42 in Steuersignale T1 bis T6 bzw. T1 bis T8 umgewandelt wird.

Der Steuersignalgenerierungsblock 42 erzeugt die Steuersignale T1 bis T6 bzw. T1 bis T8 abhängig von der momentanen Läuferlage $\varphi$ und abhängig von dem vorgegebenen Tastverhältnis, das von dem Drehmomentregler als Angabe über das bereitzustellende Drehmoment vorgegeben wird. Die Läuferlage wird von einem Positionsermittlungsblock 43 bereitgestellt. Der Positionsermittlungsblock 43 steht in Verbindung mit dem Positionsdetektor 5 an dem Synchronmotor 2, ermittelt eine Angabe über die momentane absolute Läuferlage $\varphi$ und stellt diese in geeigneter Weise dem Steuersignalgenerierungsblock 42 bereit. Der Positionsermittlungsblock 43 kann beispielsweise Zähler aufweisen, wenn der Positionsdetektor 5 eine relative Positionsänderung des Läufers des Synchronmotors 2 detektiert. Die Zähler werden abhängig von einer Drehrichtung des Läufers des Synchronmotors 2 und dessen Geschwindigkeit bzw. Drehzahl inkrementiert bzw. dekrementiert. Der Zählerwert stellt jederzeit eine Angabe über die aktuelle Läuferlage $\varphi$ dar, die dem Steuersignalgenerierungsblock 42 bereitgestellt werden kann. Weiterhin kann der Positionsermittlungsblock 43 durch eine zeitliche Ableitung einer Änderung der aktuellen Läuferlage eine Angabe über die Drehzahl $\omega$ des Synchronmotors 2 bereitstellen.

Weiterhin umfasst das Steuergerät 4 einen Spannungserfassungsblock 44, der über einen Analog-Digitalwandler 45 mit dem Spannungsdetektor 6 zum Erfassen der Versorgungsspannung $U_{DC}$ verbunden ist. Der Spannungserfassungsblock 44 stellt eine digitalisierte Angabe über die anliegende Versorgungsspannung $U_{DC}$ bereit.

Ferner ist ein Stromaufnahmeerfassungsblock 46 vorgesehen, der über einen zweiten Analog-Digitalwandler 47 mit dem Stromdetektor 7 verbunden ist. Der Stromaufnahmeerfassungsblock 46 stellt eine Angabe über den von den Inverterschaltungen (33a, 33b, 33c; 37a, 37b, 37c, 37d) aufgenommenen Gesamtstrom $I_{ZK}$ bereit. Der erfasste Motorstrom ist dabei der Strom, der über die Treiberschaltung und einen oder mehrere Phasenstränge des Synchronmotors 2 fließt. Er sollte möglichst nicht den Strom durch die Kapazitäten 36, 39 oder einen sonstigen Strom, der nicht durch einen Phasenstrang des Synchronmotors 2 fließt, messen.

Der Drehmomentregler 41 regelt das aktuell vom Synchronmotor 2 bereitgestellte Drehmoment abhängig von der Differenz zwischen dem Solldrehmoment $M_{Soll}$ und dem Ist-Drehmoment $M_{Ist}$. Beispielsweise kann das vorgegebene Tastverhältnis erhöht werden, wenn die Differenz zwischen dem Solldrehmoment $M_{Soll}$ und dem Istdrehmoment $M_{Ist}$ positiv ist, und umgekehrt verringert werden, wenn die Differenz zwischen dem Solldrehmoment $M_{Soll}$ und dem Istdrehmoment $M_{Ist}$ negativ ist.

Der Drehmomentregler 41 kann eine Vorsteuerung umfassen und/oder kann als P-, PI-, PD- oder als PID-Regler ausgebildet sein.

Das Ist-Drehmoment $M_{Ist}$ wird im vorliegenden Steuergerät 4 mithilfe einer Leistungsbilanz ermittelt. Für den Betrieb einer Synchronmaschine gilt:

$$P_{El} = P_{Verlust} + P_{Mag} + P_{Mech} = U_{DC} \times I_{DC},$$

wobei $P_{El}$ der elektrischen Leistung, $P_{Verlust}$ den Wärmeverlusten, $P_{Mag}$ den magnetischen Leistungen und $P_{Mech}$ der mechanischen Leistung entsprechen. Die magnetischen Leistungen $P_{Mag}$ können vernachlässigt werden, da diese im Mittel 0 entsprechen. Mit

$$P_{Mech} = M \times \omega,$$

wobei M dem Ist-Drehmoment und $\omega$ der Angabe über die Drehzahl des Synchronmotors 2 entsprechen, gilt:

$$M_{Ist} \times \omega = P_L - P_{Verlust} = U_{DC} \times I_{DC} - R_M \times I_M^2,$$

wobei $R_M$ dem Wicklungswiderstand des Synchronmotors 2 zwischen den Phasenanschlüssen und $I_M$ dem Motorstrom entsprechen. Der Motorstrom $I_M$ ergibt sich aus dem Gesamtstrom und dem Tastverhältnis wie folgt:

$$I_M = I_{DC}/PWM.$$

Es folgt:

$$M_{Ist} = \frac{U_{DC} \times I_{DC} - R_M \times \left(\dfrac{I_{DC}}{PWM}\right)^2}{\omega}$$

In der Praxis müssen zur Vermeidung einer Division durch Null die PWM-Signale und die Drehzahlangabe $\omega$ begrenzt werden.

Um das momentane Ist-Drehmoment $M_{Ist}$ feststellen zu können, ist es notwendig, einen Effektivstrom $I_{DC}$ in der Treiberschaltung, bzw. genauer in den Inverterschaltungen der Treiberschaltung, zu messen. Um den Versorgungsstrom $I_{DC}$ als Effektivstrom $I_{ZK}$ anzunehmen, sollte die sich ergebende Stromaufnahme möglichst konstant sein. Dies kann beispielsweise dadurch erreicht werden, dass die Pulweitenmodulation, die in dem Steuersignalgenerierungsblock 42 durchgeführt wird, ein Spannungsprofil der Phasenspannungen bzw. Phasenpotenziale anhand der Steuersignale T1 bis T6 bzw. T1 bis T8 generiert, das bevorzugt sinusförmig ist, um eine Positionsabhängigkeit der Stromaufnahme der Treiberschaltung 3 zu vermeiden. Möglich sind jedoch auch andere Modulationsarten, beispielsweise eine Blockkommutierung oder eine trapezförmige Kommutierung, wobei es dann notwendig ist, bei einer Messung des Motorstroms $I_{DC}$ diesen mit einem Formfaktor zu beaufschlagen, um den effektiven Motorstrom zu ermitteln. Eine solche Ermittlung des effektiven Motorstroms kann in dem Stromerfassungsblock 46 durchgeführt werden, so dass die Angabe über den bereitgestellten effektiven Motorstrom dem Drehmomentberechnungsblock 48 bereitgestellt wird.

**Patentansprüche**

1. Verfahren zum Ermitteln eines Ist-Drehmoments einer mehrphasigen elektrischen Maschine (2), wobei die elektrische Maschine (2) mit Hilfe einer Treiberschaltung (3) gemäß einer Pulsweitenmodulation angesteuert wird, indem Verläufe von Phasenspannungen bzw. Phasenpotenzialen an Phasensträngen der elektrischen Maschine (2) angelegt werden, mit folgenden Schritten:

   - Ermitteln der aufgenommenen elektrischen Leistung ($P_{El}$) und der ohmschen Verlustleistung der elektrischen Maschine (2);
   - Ermitteln der bereitgestellten mechanischen Leistung ($P_{Mech}$) der elektrischen Maschine (2) durch eine Leistungsbilanz abhängig von der aufgenommenen elektrischen Leistung und den ohmschen Verlusten; und
   - Bestimmen des Ist-Drehmoments ($M_{Ist}$) anhand der ermittelten mechanischen Leistung ($P_{Mech}$),

   wobei das Ermitteln der ohmschen Verlustleistung der elektrischen Maschine (2) anhand eines effektiven Motorstroms ($I_{ZK}$) und abhängig von einem Tastverhältnis (PWM) der Pulsweitenmodulation durchgeführt wird, wobei der effektive Motorstrom ($I_{ZK}$) durch Beaufschlagung eines gesamten durch Phasenstränge der elektrischen Maschine fließenden Motorstroms ($I_{DC}$) mit einem Formfaktor ermittelt wird, wobei der Formfaktor von dem durch die Ansteuerungsart bestimmten Verlauf der Phasenspannungen bzw. der Phasenpotenziale bestimmt ist.

**2.** Verfahren nach Anspruch 1, wobei eine absolute Läuferlage ermittelt wird, wobei die mechanische Leistung ($P_{Mech}$) anhand der ermittelten absoluten Läuferlage bestimmt wird.

**3.** Verfahren nach Anspruch 1, wobei die Verläufe der Phasenspannungen bzw. der Phasenpotenziale sinusförmig geformt sind, so dass der gesamte Motorstrom einen konstanten Verlauf aufweist.

**4.** Verfahren nach Anspruch 1, wobei der ermittelte gesamte Motorstrom ($I_M$) durch einen zu erwartenden Formfaktor von cos $\varphi$ dividiert wird.

**5.** Verfahren zum Regeln eines Drehmoments einer elektrischen Maschine (2), mit folgenden Schritten:

- Ermitteln eines Ist-Drehmoments nach einem der Ansprüche 1 bis 4;
- Bestimmen eines Betrags eines durch die Phasenspannungen bzw. die Phasenpotenziale bestimmten Spannungszeigers abhängig von dem Ist-Drehmoment und von einem bereitgestellten Soll-Drehmoment ($M_{Soll}$);
- Ansteuern der elektrischen Maschine (2) durch Anlegen eines Spannungszeigers mit dem bestimmten Betrag.

**6.** Vorrichtung zum Ermitteln eines Ist-Drehmoments einer mehrphasigen elektrischen Maschine, wobei die elektrische Maschine (2) mit Hilfe einer Treiberschaltung (3) gemäß einer Pulsweitenmodulation angesteuert wird, indem Verläufe von Phasenspannungen bzw. Phasenpotenzialen an Phasensträngen der elektrischen Maschine (2) angelegt werden, wobei die Vorrichtung ausgebildet ist, die folgenden Schritte auszuführen:

- Ermitteln der aufgenommenen elektrischen Leistung ($P_{El}$) und der ohmschen Verlustleistung der elektrischen Maschine (2);
- Ermitteln der bereitgestellten mechanischen Leistung ($P_{Mech}$) der elektrischen Maschine (2) durch eine Leistungsbilanz abhängig von der aufgenommenen elektrischen Leistung ($P_{El}$) und den ohmschen Verlusten;
- Bestimmen des Ist-Drehmoments ($M_{Ist}$) anhand der ermittelten mechanischen Leistung ($P_{Mech}$),

wobei die Vorrichtung weiterhin ausgebildet ist, um das Ermitteln der ohmschen Verlustleistung der elektrischen Maschine (2) anhand eines effektiven Motorstroms ($I_{ZK}$) und abhängig von einem Tastverhältnis der Pulsweitenmodulation (PWM) durchzuführen, um den effektiven Motorstrom ($I_{ZK}$) durch Beaufschlagung eines gesamten durch Phasenstränge der elektrischen Maschine fließenden, Motorstroms ($I_{DC}$) mit einem Formfaktor zu ermitteln, und um den Formfaktor von dem durch die Ansteuerungsart bestimmten Verlauf der Phasenspannungen bzw. der Phasenpotenziale zu bestimmen.

**7.** Motorsystem (1), umfassend:

- eine elektrische Maschine (2);
- eine Treiberschaltung (3);
- ein Steuergerät (4), das eine Vorrichtung nach Anspruch 6 und eine Regelungseinrichtung (41) aufweist, um abhängig von dem Ist-Drehmoment ($M_{Ist}$) und von einem bereitgestellten Soll-Drehmoment ($M_{Soll}$) einen Betrag eines durch die Phasenspannungen bzw. die Phasenpotenziale bestimmten Spannungszeigers zu bestimmen und die elektrische Maschine (2) durch Anlegen eines Spannungszeigers mit dem bestimmten Betrag mit Hilfe der Treiberschaltung (3) anzusteuern.

**Claims**

**1.** Method for ascertaining an actual torque of a polyphase electrical machine (2), wherein the electrical machine (2) is driven with the aid of a driver circuit (3) on the basis of pulse-width modulation by profiles of phase voltages or phase potentials being applied to winding phases of the electrical machine (2), comprising the following steps:

- ascertaining the drawn electrical power ($P_{E1}$) and the resistive power loss of the electrical machine (2);
- ascertaining the provided mechanical power ($P_{Mech}$) of the electrical machine (2) by a power balance depending on the drawn electrical power and the resistive losses; and
- determining the actual torque ($M_{Act}$) on the basis of the ascertained mechanical power ($P_{Mech}$),

wherein ascertaining the resistive power loss of the electrical machine (2) is carried out on the basis of an effective motor current ($I_{ZK}$) and depending on a duty factor of the pulse-width modulation (PWM),

wherein the effective motor current ($I_{ZK}$) is ascertained by applying a shaping factor to an overall motor current ($I_{DC}$) flowing through winding phases of the electrical machine, wherein the shaping factor is determined by the profile of the phase voltages or of the phase potentials which is determined by the type of driving.

2. Method according to Claim 1, wherein an absolute rotor position is ascertained, wherein the mechanical power ($P_{Mech}$) is determined on the basis of the ascertained absolute rotor position.

3. Method according to Claim 1, wherein the profiles of the phase voltages or of the phase potentials are shaped in a sinusoidal manner, so that the overall motor current has a constant profile.

4. Method according to Claim 1, wherein the ascertained overall motor current ($I_M$) is divided by an expected shaping factor of $\cos \varphi$.

5. Method for controlling a torque of an electrical machine (2), comprising the following steps:

 - ascertaining an actual torque according to one of Claims 1 to 4;
 - determining a magnitude of a voltage vector, which is determined by the phase voltages or the phase potentials, depending on the actual torque and on a provided setpoint torque ($M_{Set}$);
 - driving the electrical machine (2) by applying a voltage vector with the determined magnitude.

6. Apparatus for ascertaining an actual torque of a polyphase electrical machine, wherein the electrical machine (2) is driven with the aid of a driver circuit (3) on the basis of pulse-width modulation by profiles of the phase voltages or phase potentials being applied to winding phases of the electrical machine (2), wherein the apparatus is designed to execute the following steps:

 - ascertaining the drawn electrical power ($P_{E1}$) and the resistive power loss of the electrical machine (2);
 - ascertaining the provided mechanical power ($P_{Mech}$) of the electrical machine (2) by a power balance depending on the drawn electrical power ($P_{E1}$) and the resistive losses; and
 - determining the actual torque ($M_{Act}$) on the basis of the ascertained mechanical power ($P_{Mech}$),

wherein the apparatus is further designed to ascertain the resistive power loss of the electrical machine (2) on the basis of an effective motor current ($I_{ZK}$) and depending on a duty factor of the pulse-width modulation (PWM) in order to ascertain the effective motor current ($I_{ZK}$) by applying a shaping factor to an overall motor current ($I_{DC}$) flowing through winding phases of the electrical machine, and in order to determine the shaping factor from the profile of the phase voltages or of the phase potentials which is determined by the type of driving.

7. Motor system (1), comprising:

 - an electrical machine (2);
 - a driver circuit (3);
 - a controller (4) which has an apparatus according to Claim 6 and a control device (41) in order to determine a magnitude of a voltage vector, which is determined by the phase voltages or the phase potentials, depending on the actual torque ($M_{Act}$) and on a provided setpoint torque ($M_{Set}$), and to drive the electrical machine (2) by applying a voltage vector with the determined magnitude with the aid of the driver circuit (3).

**Revendications**

1. Procédé de détermination d'un couple de rotation réel d'une machine électrique (2) polyphasée, dans lequel la machine électrique (2) est commandée conformément à une modulation d'impulsion en largeur à l'aide d'un circuit d'attaque (3) en appliquant des courbes de tensions de phase ou de potentiels de phase à des conducteurs de phase de la machine électrique (2), comprenant les étapes suivants :

 - obtenir la puissance électrique consommée ($P_{EI}$) et la puissance de perte ohmique de la machine électrique (2) ;
 - obtenir la puissance mécanique délivrée ($P_{Mech}$) de la machine électrique (2) par un bilan de puissance qui est fonction de la puissance électrique consommée et des pertes ohmiques ; et
 - déterminer le couple de rotation réel ($M_{Ist}$) sur la base de la puissance mécanique obtenue ($P_{Mech}$),

dans lequel la puissance de perte ohmique de la machine électrique (2) est obtenue sur la base d'un courant de moteur effectif ($I_{ZK}$) et en fonction d'un rapport cyclique (PWM) de la modulation d'impulsion en largeur, dans lequel le courant de moteur effectif ($I_{ZK}$) est obtenu en appliquant un facteur de forme à un courant de moteur total ($I_{DC}$) passant à travers des conducteurs de phase de la machine électrique, dans lequel le facteur de forme est déterminé par la trace, déterminée par le type de commande, des tensions de phase ou des potentiels de phase.

2. Procédé selon la revendication 1, dans lequel une position absolue du rotor est obtenue, dans lequel la puissance mécanique ($P_{Mech}$) est déterminée sur la base de la position absolue déterminée du rotor.

3. Procédé selon la revendication 1, dans lequel les traces des tensions de phase ou des potentiels de phase sont conformées de manière sinusoïdale afin que le courant de moteur total présente une trace constante.

4. Procédé selon la revendication 1, dans lequel le courant de moteur total obtenu ($I_M$) est divisé par un facteur de forme attendu divisé par cos $\varphi$.

5. Procédé de régulation d'un couple de rotation d'une machine électrique (2), comprenant les étapes suivantes :

- obtenir un couple de rotation réel selon l'une quelconque des revendications 1 à 4 ;
- déterminer une amplitude d'un vecteur de tension déterminé à partir des tensions de phase ou des potentiels de phase en fonction du couple de rotation réel et d'un couple de rotation théorique ($M_{Soll}$) fourni ;
- commander la machine électrique (2) en appliquant un vecteur de tension ayant l'amplitude déterminée.

6. Dispositif destiné à obtenir un couple de rotation réel d'une machine électrique polyphasée, dans lequel la machine électrique (2) est commandée à l'aide d'un circuit d'attaque (3) conformément à une modulation d'impulsion en largeur en appliquant des courbes de tensions de phase ou de potentiels de phase à des conducteurs de phase de la machine électrique (2), dans lequel le dispositif est configuré pour mettre en oeuvre les étapes suivantes :

- obtenir la puissance électrique consommée ($P_{El}$) et la puissance de perte ohmique de la machine électrique (2) ;
- obtenir la puissance mécanique délivrée ($P_{Mech}$) de la machine électrique (2) par un bilan de puissance qui est fonction de la puissance électrique consommée ($P_{El}$) et des pertes ohmiques ; et
- déterminer le couple de rotation réel ($M_{Ist}$) sur la base de la puissance mécanique obtenue ($P_{Mech}$),

dans lequel le dispositif est en outre configuré pour obtenir la puissance de perte ohmique de la machine électrique (2) sur la base d'un courant de moteur effectif ($I_{ZK}$) et en fonction d'un rapport cyclique de la modulation d'impulsion en largeur (PWM), afin d'obtenir le courant de moteur effectif ($I_{ZK}$) en appliquant un facteur de forme à un courant de moteur total ($I_{DC}$) passant à travers des conducteurs de phase de la machine électrique, et afin de déterminer le facteur de forme de la courbe, déterminée par le type de commande, des tensions de phase ou des potentiels de phase.

7. Système de moteur (1), comprenant :

- une machine électrique (2) ;
- un circuit d'attaque (3) ;
- un appareil de commande (4) qui comporte un dispositif selon la revendication 6 et un moyen de régulation (41), afin de déterminer, en fonction du couple de rotation réel ($M_{Ist}$) et du couple de rotation théorique délivré ($M_{Soll}$), une amplitude d'un vecteur de tension déterminé par les tensions de phase ou les potentiels de phase et de commander la machine électrique (2) en appliquant un vecteur de tension ayant l'amplitude déterminée à l'aide du circuit d'attaque (3).

# Fig. 1

# Fig. 2a

**Fig. 2b**

EP 2 594 017 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004178756 A
- JP 2006094596 B
- US 4602201 A